# EUROPEAN PATENT APPLICATION

(11) **EP 4 373 018 A1**
(43) Date of publication of application: **22.05.2024**
(21) Application number: 22855374.9
(22) Date of filing: 08.08.2022
(51) Int. Cl.: H04L 1/00

(54) **LINK ADAPTATION METHOD, RELATED DEVICE, STORAGE MEDIUM, AND COMPUTER PROGRAM**

(30) Priority: 10.08.2021 CN 202110917837
(71) Applicant: Huawei Technologies Co., Ltd., Shenzhen, Guangdong 518129 (CN)
(72) Inventor: YU, Jian, Shenzhen, Guangdong 518129 (CN); LIU, Chenchen, Shenzhen, Guangdong 518129 (CN); HU, Mengshi, Shenzhen, Guangdong 518129 (CN); GAN, Ming, Shenzhen, Guangdong 518129 (CN)
(74) Representative: Maiwald GmbH
(86) International application number: PCT/CN2022/110817
(87) International publication number: WO 2023/016393

(57) **Abstract**

This application discloses a link adaptation method, a related device, a storage medium, and a computer program. The method includes: A transmitter device generates a link adaptation physical layer protocol data unit LA PPDU, where a signal of the LA PPDU on some of resources is a null signal, and the resources include any one or more of the following: a time resource, a frequency resource, a space resource, a time-frequency resource, a time-space resource, a frequency-space resource, and a time-space-frequency resource; the transmitter device sends the LA PPDU to a receiver device; and the receiver device determines a link adaptation result based on the null signal of the LA PPDU on the some of the resources. According to the solutions of this application, the transmitter device sends the LA PPDU to the receiver device, where the signal of the LA PPDU on the some of the resources is the null signal. In this way, the receiver device can obtain an accurate link adaptation result based on the null signal of the PPDU on the some of the resources.

## Description

This application claims priority to Chinese Patent Application No. 202110917837.2, filed with the China National Intellectual Property Administration on August 10, 2021, and entitled "LINK ADAPTATION METHOD, RELATED DEVICE, STORAGE MEDIUM, AND COMPUTER PROGRAM", which is incorporated herein by reference in its entirety.

### TECHNICAL FIELD

This application relates to the field of communication technologies, and in particular, to a link adaptation (link adaptation) method, a related device, a storage medium, and a computer program.

### BACKGROUND

For wireless communication, a channel condition is usually affected by factors such as a path loss (path loss), shadowing (shadowing), fading (fading), noise (noise), and interference (interference). These factors change with time, and consequently the channel condition also changes.

A transmitter device for wireless communication may select different modulation and coding schemes (modulation and coding schemes, MCSs) based on different channel conditions by using a specific method, to achieve a specific compromise between a transmission success probability and a high transmission rate. This improves an overall system throughput. The foregoing process is referred to as link adaptation.

To select an appropriate MCS, the transmitter device needs to learn of a channel condition to some extent, for example, a signal-to-noise ratio (signal-to-noise ratio, SNR) of a channel. This needs a specific detection and feedback process to ensure that the transmitter device obtains some parameters of the channel, for example, the SNR. However, when a receiver device determines parameters such as the SNR and the MCS, interference is usually mixed with noise, and interference in a detection signal cannot be accurately estimated.

Therefore, how to obtain an accurate link adaptation result is a problem to be resolved in the solutions of this application.

### SUMMARY

This application provides a link adaptation method, a related device, a storage medium, and a computer program, to obtain an accurate link adaptation result.

According to a first aspect, a link adaptation method is provided. The method includes: A receiver device receives a link adaptation physical layer protocol data unit (link adaptation PHY protocol data unit, LA PPDU), where a signal of the LA PPDU on some of resources is a null signal, and the resources include any one or more of the following: a time resource, a frequency resource, a space resource, a time-frequency resource, a time-space resource, a frequency-space resource, and a time-space-frequency resource; and the receiver device determines a link adaptation result based on the null signal of the LA PPDU on the some of the resources. In this aspect, the receiver device receives the LA PPDU sent by a transmitter device, where the signal of the LA PPDU on the some of the resources is a null signal. In this way, the receiver device obtains an accurate link adaptation result based on the null signal of the LA PPDU on the some of the resources.

In a possible implementation, the method further includes: The receiver device sends the link adaptation result. In this implementation, the transmitter device receives the link adaptation result as feedback, and may perform link adaptation adjustment. This improves reliability of link adaptation.

In another possible implementation, the method further includes: The receiver device sends a trigger frame. The trigger frame indicates to send the LA PPDU.

In still another possible implementation, that the receiver device determines a link adaptation result based on the null signal of the LA PPDU on the some of the resources includes: The receiver device estimates, based on the null signal of the LA PPDU on the some of the resources, power of interference on the some of the resources; and the receiver device obtains the link adaptation result based on the power of the interference on the some of the resources. In this implementation, after the power of the interference on the some of the resources is accurately estimated, another link adaptation result may be accurately determined based on the power of the interference.

According to a second aspect, a link adaptation method is provided. The method includes: A transmitter device generates an LA PPDU, where a signal of the LA PPDU on some of resources is a null signal, and the resources include any one or more of the following: a time resource, a frequency resource, a space resource, a time-frequency resource, a time-space resource, a frequency-space resource, and a time-space-frequency resource; and the transmitter device sends the LAPPDU. In this aspect, the transmitter device sends the LAPPDU to a receiver device, where the signal of the LAPPDU on the some of the resources is the null signal. In this way, the receiver device can obtain an accurate link adaptation result based on the null signal of the LA PPDU on the some of the resources.

In a possible implementation, the method further includes: The transmitter device receives a link adaptation result.

In another possible implementation, the method further includes: The transmitter device receives a trigger frame. The trigger frame indicates to send the LA PPDU.

With reference to the first aspect and the second aspect, in a possible implementation, the resources are time-frequency resources. Signals of the LA PPDU on a first time-frequency resource include a signal with energy and a null signal. The first time-frequency resource is a time-frequency resource including one symbol and bandwidth occupied by the LA PPDU. The symbol is a unit of time in the time-frequency resource.

With reference to the first aspect and the second aspect, in another possible implementation, the bandwidth occupied by the LA PPDU includes a plurality of frequency resource groups. The some of the time-frequency resources are time-frequency resources including one symbol and some of the frequency resource groups.

With reference to the first aspect and the second aspect, in still another possible implementation, the resources are time-frequency resources. The some of the time-frequency resources include time-frequency resources separately including different symbols and different frequency resource groups. The symbol is the unit of time in the time-frequency resource.

With reference to the first aspect and the second aspect, in still another possible implementation, the some of the time-frequency resources in the LAPPDU are periodic.

With reference to the first aspect and the second aspect, in still another possible implementation, the signal with energy is at least one first sequence. The at least one first sequence is a preset test sequence. Different first sequences correspond to different modulation and coding schemes MCSs. Alternatively, the signal with energy is a data bit that carries a media access control protocol data unit (media access control protocol data unit, MPDU). For example, a data field of the LAPPDU carries the data bit.

With reference to the first aspect and the second aspect, in still another possible implementation, the resources are time-space resources. Signals of the LA PPDU on a first time-space resource include a signal with energy and a null signal. The first time-space resource is a time-space resource including one symbol and all spatial streams. The symbol is the unit of time in the time-space resource.

With reference to the first aspect and the second aspect, in still another possible implementation, the resources are time-space resources. The some of the time-space resources are time-space resources including one symbol and some of the spatial streams. The symbol is the unit of time in the time-space resource.

With reference to the first aspect and the second aspect, in still another possible implementation, the signal with energy is at least one second sequence. The at least one second sequence is an extremely high throughput long training field (extremely high throughput long training, EHT-LTF).

With reference to the first aspect and the second aspect, in still another possible implementation, the LAPPDU includes a subfield of a number of EHT-LTF symbols. The subfield of the number of EHT-LTF symbols indicates a number of symbols corresponding to the at least one second sequence in the LA PPDU.

With reference to the first aspect and the second aspect, in still another possible implementation, the signal with energy is at least one third sequence. The at least one third sequence is a preset test sequence. Different third sequences correspond to different MCSs. Alternatively, the signal with energy is a data bit that carries an MPDU.

With reference to the first aspect and the second aspect, in still another possible implementation, the link adaptation result includes at least one of the following: power of interference; power of noise; power of the signal with energy; a signal-to-noise ratio; a signal to interference plus noise ratio; a recommended modulation and coding scheme (modulation and coding scheme, MCS) based on the signal-to-noise ratio; a recommended MCS based on the signal to interference plus noise ratio; a recommended number of spatial streams based on the signal-to-noise ratio; or a recommended number of spatial streams based on the signal to interference plus noise ratio.

With reference to the first aspect and the second aspect, in still another possible implementation, the LAPPDU further includes indication information. The indication information indicates that the LA PPDU is used for link adaptation detection.

With reference to the first aspect and the second aspect, in still another possible implementation, the indication information is located in any one of the following: any one of B20 to B24 of a first symbol of a universal signal field (universal signal field, U-SIG); B25 of the first symbol of the U-SIG field; B2 or B8 of a second symbol of the U-SIG field; any one of B13 to B16 of an extremely high throughput signal field (extremely high throughput signal field, EHT-SIG); or a customized PPDU format and compressed mode field in the U-SIG field.

According to a third aspect, a receiver device is provided. The receiver device includes a transceiver unit and a processing unit. The transceiver unit is configured to receive an LAPPDU. A signal of the LA PPDU on some of resources is a null signal. The resources include any one or more of the following: a time resource, a frequency resource, a space resource, a time-frequency resource, a time-space resource, a frequency-space resource, and a time-space-frequency resource. The processing unit is configured to determine a link adaptation result based on the null signal of the LAPPDU on the some of the resources.

Optionally, the transceiver unit is further configured to send the link adaptation result.

Optionally, the transceiver unit is further configured to send a trigger frame. The trigger frame indicates to send the LAPPDU.

Optionally, the processing unit is further configured to estimate, based on the null signal of the LAPPDU on the some of the resources, power of interference on the some of the resources. The processing unit is further configured to obtain the link adaptation result based on the power of the interference on the some of the resources.

According to a fourth aspect, a transmitter device is provided. The transmitter device includes a processing unit and a transceiver unit. The processing unit is configured to generate an LA PPDU. A signal of the LAPPDU on some of resources is a null signal. The resources include any one or more of the following: a time resource, a frequency resource, a space resource, a time-frequency resource, a time-space resource, a frequency-space resource, and a time-space-frequency resource. The transceiver unit is configured to send the LA PPDU.

Optionally, the transceiver unit is further configured to receive a link adaptation result.

Optionally, the transceiver unit is further configured to receive a trigger frame. The trigger frame indicates to send the LA PPDU.

According to a fifth aspect, a computer-readable storage medium is provided. The computer-readable storage medium stores instructions. When the instructions are run on a computer, the computer is enabled to perform the link adaptation method provided in any possible implementation of the first aspect and the second aspect.

According to a sixth aspect, a computer program product including instructions is provided. When the computer program product is run on a computer, the computer is enabled to perform the link adaptation method provided in any possible implementation of the first aspect and the second aspect.

It may be understood that any one of an apparatus for the link adaptation method, the computer storage medium, or the computer program product provided above is configured to perform the corresponding method provided above. Therefore, for beneficial effects that can be achieved by the apparatus, the computer storage medium, or the computer program product, refer to the beneficial effects in the corresponding method provided above. Details are not described herein again.

### BRIEF DESCRIPTION OF DRAWINGS

FIG. 1 is a schematic diagram of a structure of a communication system to which an embodiment of this application is applicable;
FIG. 2 is a schematic flowchart of a link adaptation method according to an embodiment of this application;
FIG. 3 is a schematic diagram of an example of a format of a link adaptation physical layer protocol data unit according to this application;
FIG. 4a is a schematic diagram of an example of a PPDU format according to an embodiment of this application;
FIG. 4b is a schematic diagram of an example of another PPDU format according to an embodiment of this application;
FIG. 4c is a schematic diagram of an example of still another PPDU format according to an embodiment of this application;
FIG. 5a is a schematic diagram of an example of still another PPDU format according to an embodiment of this application;
FIG. 5b is a schematic diagram of an example of still another PPDU format according to an embodiment of this application;
FIG. 5c is a schematic diagram of an example of still another PPDU format according to an embodiment of this application;
FIG. 6 is a schematic diagram of an example of still another PPDU format according to an embodiment of this application;
FIG. 7A and FIG. 7B are a schematic diagram of a structure of a trigger frame according to an embodiment of this application;
FIG. 8 is a schematic diagram of a structure of a receiver device according to an embodiment of this application;
FIG. 9 is a schematic diagram of a structure of a transmitter device according to an embodiment of this application;
FIG. 10 is a schematic diagram of a structure of another receiver device according to an embodiment of this application; and
FIG. 11 is a schematic diagram of a structure of another transmitter device according to an embodiment of this application.

### DESCRIPTION OF EMBODIMENTS

Embodiments of this application are described below with reference to the accompanying drawings in embodiments of this application.

It should be understood that embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G communication system, and a future 6G communication system.

It should be further understood that embodiments of this application may be further applied to various non-orthogonal multiple access technology-based communication systems, for example, a sparse code multiple access (sparse code multiple access, SCMA) system. Certainly, SCMA may also be referred to as another name in the communication field. Further, the technical solutions in embodiments of this application may be applied to a multi-carrier transmission system using the non-orthogonal multiple access technology, for example, an orthogonal frequency division multiplexing (orthogonal frequency division multiplexing, OFDM) system, a filter bank multi-carrier (filter bank multi-carrier, FBMC) system, a generalized frequency division multiplexing (generalized frequency division multiplexing, GFDM) system, or a filtered-orthogonal frequency division multiplexing (filtered-OFDM, F-OFDM) system that uses the non-orthogonal multiple access technology.

It should be further understood that embodiments of this application may be applied to an LTE system, a 5G system, and a further evolved system like 6G, or another wireless communication system using various radio access technologies, for example, a system using access technologies such as code division multiple access, frequency division multiple access, time division multiple access, orthogonal frequency division multiple access, and single carrier frequency division multiple access, and are particularly applicable to a scenario that needs channel information feedback and/or application of a two-stage precoding technology, for example, application of a wireless network using a massive multiple-input multiple-output (Massive multiple-input multiple-output, Massive MIMO) technology, and application of a wireless network using a distributed antenna technology.

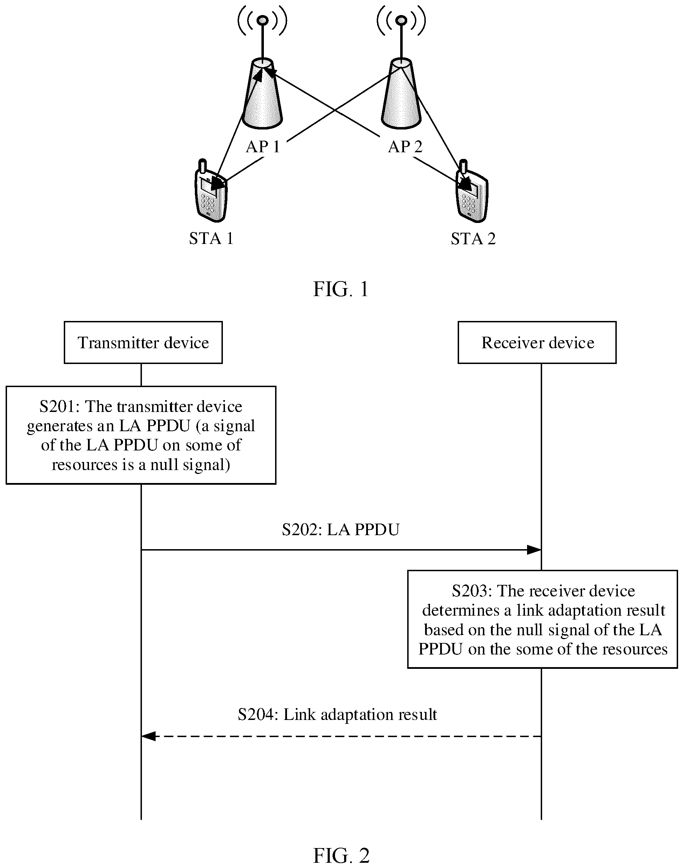

It should be further understood that embodiments of this application may be applied to Wi-Fi wireless communication. A Wi-Fi wireless communication system includes an access point (access point, AP) and a work station (station, STA). The work station may also be referred to as a station. Related wireless communication scenarios may include communication between the AP and the STA, communication between APs, communication between STAs, and the like. Embodiments of this application use communication between the AP and the STA as an example for description. As shown in FIG. 1, an AP 1 may perform wireless communication with an STA 1 and an STA 2, and an AP 2 may also perform wireless communication with the STA 1 and the STA 2. It should be understood that a method described in embodiments of this application is also applicable to communication between the APs, communication between the STAs, and the like.

A structure of the AP or the STA in embodiments of this application may include a media access control (media access control, MAC) layer and a physical layer (physical, PHY). The AP and the STA may perform PPDU transmission by using a physical layer protocol data unit (PHY Protocol Data Unit, PPDU). In addition, a frame structure of the PPDU varies with a wireless communication protocol used by the AP and the STA.

According to the Background, when a receiver device feeds back a channel condition, a magnitude of interference in a detection signal cannot be accurately estimated. This application provides a link adaptation solution. A transmitter device sends a link adaptation physical layer protocol data unit (link adaptation physical layer protocol data unit, LA PPDU) to a receiver device, where a signal of the LA PPDU on some of resources is a null signal. In this way, the receiver device obtains an accurate link adaptation result based on the null signal of the LA PPDU on the some of the resources.

FIG. 2 is a schematic flowchart of a link adaptation method according to an embodiment of this application. The method may include the following steps.

S201: A transmitter device generates a PPDU.

This embodiment may be used in a downlink adaptation process. In this case, the transmitter device may be the foregoing AP, and correspondingly, a receiver device may be the foregoing STA. This embodiment may also be used in an uplink adaptation process. In this case, the transmitter device may be the foregoing STA, and correspondingly, the receiver device may be the foregoing AP. Optionally, the link adaptation process may enable the transmitter device to obtain an MCS recommended by the receiver device. The transmitter device may also be referred to as a modulation and coding scheme feedback (modulation and coding scheme feedback, MFB) requester, and the receiver device may also be referred to as an MFB responder.

To perform channel or link adaptation detection, the transmitter device generates the PPDU. In this embodiment, the PPDU is used for link adaptation detection. Therefore, the PPDU may also be referred to as an LA PPDU.

To measure power of interference from another device or another time, frequency, or spatial stream to a specific time, frequency, or spatial stream, in this embodiment, a signal of the LA PPDU on some of resources is a null signal. The resources include any one or more of the following: a time resource, a frequency resource, a space resource, a time-frequency resource, a time-space resource, a frequency-space resource, and a time-space-frequency resource. To be specific, the resources may be any one of the time resource, the frequency resource, and the space resource, or may be a combination of any number of types of the time resource, the frequency resource, and the space resource. The any number of types may be 2 or 3.

A unit of the time resource may be a frame, a subframe, a slot, a mini-slot, a second, a millisecond, a symbol, or the like.

A unit of the frequency resource may be a subcarrier, a resource unit (resource unit, RU), a subcarrier group, a channel, or the like.

A unit of the space resource may be a spatial stream or a spatial stream group.

The LA PPDU includes first resources. A signal on some of resources of the first resources is a null signal, a signal on a remaining resource of the first resources is a signal with energy, and not all signals on the first resources are null signals. Therefore, a third-party device can be prevented from preempting the first resources. In other words, the third-party device can be prevented from preempting an air interface resource. In addition, the transmitter device can send the LA PPDU, to complete link adaptation detection and feedback.

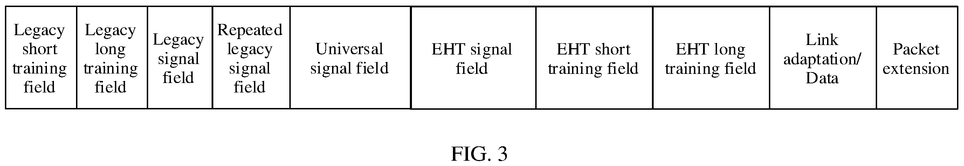

For example, when a wireless communication protocol used by the AP and the STA is 802.11be, a frame structure of the LA PPDU is shown in FIG. 3, and includes a legacy short training field (legacy-short training field, L-STF), a legacy long training field (legacy-long training field, L-LTF), a legacy signal field (legacy-signal field, L-SIG), a repeated legacy signal field (repeated legacy-signal field, RL-SIG), a universal signal field (universal signal field, U-SIG), an extremely high throughput signal field (extremely high throughput-signal field, EHT-SIG), an extremely high throughput short training field (extremely high throughput-short training field, EHT-STF), an extremely high throughput long training field (extremely high throughput-long training field, EHT-LTF), a link adaptation/data (link adaptation/data) field, and a packet extension (packet extension, PE) field. A data field of the PPDU carries a data bit. It should be noted that the L-STF, the L-LTF, and the L-SIG in the foregoing fields may be referred to as legacy preambles. The U-SIG may specifically include a version independent field, a version dependent information field, a cyclic redundancy code, and a tail. The EHT-SIG may specifically include an EHT-SIG common field and an EHT-SIG user specific field.

Meanings of the fields are shown in the following Table 1.

**Table 1**

| English abbreviation | Full English expression | Chinese expression | Function |
|---|---|---|---|
| L-STF | Legacy Short Training Field | Legacy short training field | Perform PPDU discovery, coarse synchronization, and automatic gain control |
| L-LTF | Legacy Long Training Field | Legacy long training field | Perform fine synchronization and channel estimation |
| L-SIG | Legacy Signal Field A | Legacy signal field | Carry signal information related to a PPDU length, to ensure coexistence |
| U-SIG | Universal SIG | Universal signal field | Similar to an HE-SIG-A, a difference is that a universal signal field is used in a subsequent standard from the generation of an EHT PPDU, and therefore, this field is referred to as the universal signal field |
| EHT-SIG | Extremely High Throughput Signal Field | Extremely high throughput signal field | Carry a signal used to demodulate subsequent data, mainly including resource unit indication information |
| EHT-STF | Extremely High Throughput Short Training Field | Extremely high throughput short training field | Perform automatic gain control of a subsequent field |
| EHT-LTF | Extremely High Throughput Long Training Field | Extremely high throughput long training field | Perform channel estimation |
| LA/Data | Link Adaptation/Data Field | Link adaptation/Data | Perform link adaptation/Carry data information |
| PE | Packet Extension | Packet extension | Increase processing time of a receiver |

It should be noted that the foregoing only uses a frame structure of the EHT PPDU in 802. 1 The as an example for description, and the frame structure of the PPDU does not constitute a limitation on this embodiment of this application.

The some of the resources in the PPDU may be some of resources in which the LA/data field is located, or may be some of resources in which another field is located.

S202: The transmitter device sends the LA PPDU to the receiver device.

S203: The receiver device determines a link adaptation result based on the null signal of the LA PPDU on the some of the resources.

After receiving the LA PPDU, the receiver device may estimate power of interference on the some of the resources (it is assumed that power of noise is 0 or a specified value) based on the null signal of the LA PPDU on the some of the resources. For example, the resources are time resources, the LA PPDU on some of the time resources is a null signal, and the receiver device may determine power of interference on the some of the time resources. For another example, the resources are frequency resources, the LA PPDU on some of the frequency resources is a null signal, and the receiver device may determine power of interference on the some of the frequency resources. For another example, the resources are space resources, the LA PPDU on some of the space resources (that may be one or more spatial streams) is a null signal, and the receiver device may determine power of interference on the some of the space resources (the one or more spatial streams), for example, power of interference of a signal with energy of the LA PPDU on another spatial stream (that may be one or more spatial streams) to the some of the space resources. For another example, the resources are time-frequency resources, the LA PPDU on some of the time-frequency resources is a null signal, and the receiver device may determine power of interference on the some of the time-frequency resources. For another example, the resources are time-space resources, the LA PPDU on some of the time-space resources is a null signal, and the receiver device may determine power of interference on the some of the time-space resources. For another example, the resources are frequency-space resources, the LA PPDU on some of the frequency-space resources is a null signal, and the receiver device may determine power of interference on the some of the frequency-space resources. For another example, the resources are time-space-frequency resources, the LAPPDU on some of the time-space-frequency resources is a null signal, and the receiver device may determine power of interference on the some of the time-space-frequency resources.

In addition to obtaining the power of the interference on the some of the resources, another link adaptation result may be obtained based on the power of the interference on the some of the resources.

The another link adaptation result includes at least one of the following:
power of noise;
power of the signal with energy;
a signal-to-noise ratio;
a signal to interference plus noise ratio (signal to interference plus noise ratio, SINR);
a recommended MCS based on the signal-to-noise ratio;
a recommended MCS based on the signal to interference plus noise ratio;
a recommended number of spatial streams based on the signal-to-noise ratio; or
a recommended number of spatial streams based on the signal to interference plus noise ratio.

Specifically, it is assumed that the power of the noise is not 0 or a specified value. The receiver device may estimate a sum of the power of the noise and the power of the interference based on the null signal of the LAPPDU on the some of the resources.

The power of the noise may be obtained in the following several implementations: In an implementation, the power of the noise may be estimated through two repeated L-LTF portions (interference and a useful signal on each of the two repeated L-LTF portions remain unchanged) in an L-LTF field in the LAPPDU. In another implementation, the noise may be estimated through two repeated test sequences (interference and a useful signal on each of the two repeated test sequences remain unchanged). In still another implementation, the noise is removed through a smoothing operation of the receiver device.

The signal with energy on the remaining resource, other than the some of the resources, of the first resources is a preset test sequence (test portion, TP) or a data bit. For example, the data bit carries an MPDU. The data field of the LAPPDU carries the data bit. The receiver device may obtain, based on the signal with energy carried on the remaining resource, the power of the signal with energy, the power of the noise, and the power of the interference. The power of the signal with energy may be obtained based on the foregoing obtained power of the noise and power of the interference.

Based on the foregoing obtained power of the signal with energy and power of the noise, the signal-to-noise ratio (signal-to-noise ratio, SNR) may be obtained as the power of the signal with energy/the power of the noise.

Based on the foregoing obtained power of the signal with energy, power of the noise, and power of the interference, the signal to interference plus noise ratio (signal to interference plus noise ratio, SNR) may be obtained as the power of the signal with energy/(the power of the noise+the power of the interference).

The receiver device obtains in advance correspondences between various SNRs and MCSs by simulation and the like. After obtaining the foregoing SNR, the receiver device may obtain an MCS based on the SNR, and provide a recommended MCS for the transmitter device.

The receiver device obtains in advance correspondences between various SINRs and MCSs by simulation and the like. After obtaining the foregoing SINR, the receiver device may obtain an MCS based on the SINR, and provide a recommended MCS for the transmitter device.

Different MCSs correspond to different code rates and different modulation schemes. Correspondences between the MCSs and the code rates/modulation schemes are shown in the following Table 2.

**Table 2**

| EHT-MCS index | Modulation scheme | Code rate |
|---|---|---|
| 0 | Binary phase shift keying (binary phase shift keying, BPSK) | 1/2 |
| 1 | Quadrature phase shift keying (quadrature phase shift keying, QPSK) | 1/2 |
| 2 | QPSK | 3/4 |
| 3 | 16-QAM | 1/2 |
| 4 | 16-QAM | 3/4 |
| 5 | 64-QAM | 2/3 |
| 6 | 64-QAM | 3/4 |
| 7 | 64-QAM | 5/6 |
| 8 | 256-QAM | 3/4 |
| 9 | 256-QAM | 5/6 |
| 10 | 1024-QAM | 3/4 |
| 11 | 1024-QAM | 5/6 |
| 12 | 4096-QAM | 3/4 |
| 13 | 4096-QAM | 5/6 |
| 14 | BPSK+DCM+DUP (copying mode) | 1/2 |
| 15 | BPSK+DCM (Dual Carrier Modulation, dual carrier modulation) | 1/2 |

A correspondence between a modulation scheme and a code rate is identified by a corresponding extremely high throughput-modulation and coding scheme (extremely high throughput-modulation and coding scheme, EHT-MCS) index.

A modulation scheme identified by EHT-MCS 14 is applicable to an LA PPDU in an EHT single-user copying mode of a 6 GHz frequency band.

The receiver device obtains in advance correspondences between various SNRs and the number of spatial streams in advance by simulation and the like. After obtaining the SNR, the receiver device may obtain a number of spatial streams based on the SNR, and provide a recommended number of spatial streams for the transmitter device. In an implementation, the foregoing recommended number of spatial streams based on the SNR may be applicable to a single user-multiple input multiple output (single user-multiple input multiple output, SU-MIMO) system and a multi-user-multiple input multiple output (multi-user-multiple input multiple output, MU-MIMO) system. In another implementation, the link adaptation result may also include the recommended NSS based on the SNR in SU-MIMO transmission. In still another implementation, the link adaptation result may also include the recommended NSS based on the SNR in MU-MIMO transmission.

The receiver device obtains in advance correspondences between various SINRs and the number of spatial streams in advance by simulation and the like. After obtaining the SINR, the receiver device may obtain a number of spatial streams based on the SINR, and provide a recommended number of spatial streams for the transmitter device.

In an implementation, the recommended number of spatial streams based on the SINR may be applicable to the SU-MIMO system and the MU-MIMO system. In another implementation, the link adaptation result may also include the recommended number of spatial streams based on the SINR in the SU-MIMO transmission. In still another implementation, the link adaptation result may also include the recommended number of spatial streams based on the SINR in the MU-MIMO transmission.

In addition, the signal with energy of the LA PPDU on the remaining resource of the first resources may be at least one preset test sequence (test portion, TP). One test sequence corresponds to one MCS; and/or the signal with energy of the LA PPDU on the remaining resource of the first resources may be the data bit that carries the media access control protocol data unit (media access control protocol data unit, MPDU). The data field of the LA PPDU carries the data bit.

Test sequences corresponding to different MCSs may help the receiver device identify an optimal MCS. For example, the receiver device simultaneously demodulates the test sequences corresponding to different MCSs, and feeds back an MCS corresponding to a successfully demodulated test sequence to the transmitter device. Alternatively, the test sequence is a known receiving and sending sequence, and the receiver device performs demodulation bit by bit, and feeds back, to the transmitter device, a highest MCS with X% bits successfully demodulated as a recommended optimal MCS. X is a positive integer, and is a preset threshold, for example, 90.

S204. The receiver device sends the link adaptation result to the transmitter device.

This step is an optional step, and is represented by a dashed line in the figure. The receiver device receives the link adaptation result, and may perform link adaptation adjustment based on the link adaptation result. The receiver device may further perform link adaptation adjustment based on the link adaptation result, and receive downlink data transmission.

For example, in the SU-MIMO system, a user simultaneously transmits data on a plurality of spatial streams, and interference between the plurality of spatial streams may be excessively large. If the link adaptation result includes the recommended number of spatial streams based on the signal-to-noise ratio, the recommended number of spatial streams based on the signal to interference plus noise ratio, a recommended number of spatial streams based on a signal-to-noise ratio corresponding to the time-space resource, or a recommended number of spatial streams based on a signal to interference plus noise ratio corresponding to the time-space resource, the transmitter device may transmit data based on the recommended number of spatial streams.

For the MU-MIMO system, each user simultaneously transmits data on one or more spatial streams, and interference between the one or more spatial streams corresponding to each user may be excessively large. If the link adaptation result includes the recommended number of spatial streams based on the signal-to-noise ratio, the recommended number of spatial streams based on the signal to interference plus noise ratio, the recommended number of spatial streams based on the signal-to-noise ratio corresponding to the time-space resource, or the recommended number of spatial streams based on the signal to interference plus noise ratio corresponding to the time-space resource, the transmitter device may transmit data based on the recommended number of spatial streams.

According to the link adaptation method provided in this embodiment of this application, the transmitter device sends the LA PPDU to the receiver device, where the signal of the LA PPDU on the some of the resources is the null signal. In this way, the receiver device obtains an accurate link adaptation result based on the null signal of the LA PPDU on the some of the resources.

The following specifically describes an LA PPDU format.

In an implementation, the foregoing resources are time-frequency resources, and signals of the LA PPDU on a first time-frequency resource include a signal with energy and a null signal. The first time-frequency resource is a time-frequency resource including one symbol and bandwidth occupied by the LA PPDU. The symbol is a unit of time in the time-frequency resource.

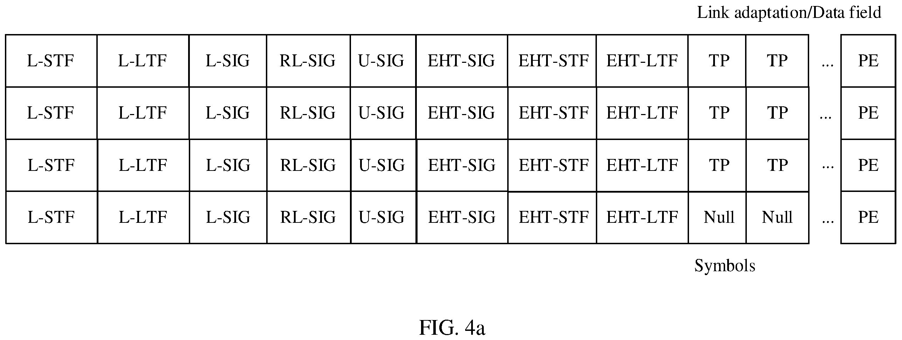

In an example, the bandwidth occupied by the LA PPDU includes a plurality of frequency resource groups, the LAPPDU on some of the time-frequency resources is a null signal, and the some of the time-frequency resources are time-frequency resources including one symbol and some of the frequency resource groups. Refer to FIG. 4a. Data subcarriers in the bandwidth occupied by the LAPPDU may be divided into a plurality of RUs, and each RU includes a plurality of subcarriers. For example, it is assumed that the bandwidth occupied by the LA PPDU is 80 MHz. In this case, the data subcarriers in the bandwidth occupied by the LAPPDU may be divided into four RUs (an RU 1 to an RU 4 from bottom to top), and one RU is a 242-tone RU, corresponding to 20 MHz. The some of the time-frequency resources are time-frequency resources including one symbol and one RU (RU 1). A signal of the LA PPDU on the some of the time-frequency resources is a null signal. A signal with energy of the LA PPDU on time-frequency resources including the symbol and the RU 2 to the RU 4 is a TP or data. As shown in FIG. 4a, on a first symbol after an EHT-LTF, the signal with energy of the LA PPDU on the time-frequency resources including the symbol and the RU 2 to the RU 4 includes the TP. A receiver device may obtain power of noise and power of interference based on the null signal on the some of the time-frequency resources including the first symbol.

Optionally, the some of the time-frequency resources in the LAPPDU may be periodic, so that the receiver device can obtain a change status of the power of the interference. As shown in FIG. 4a, on a second symbol after the EHT-LTF, time-frequency resources including the second symbol and four RUs are included. A signal on the RU 1 is a null signal.

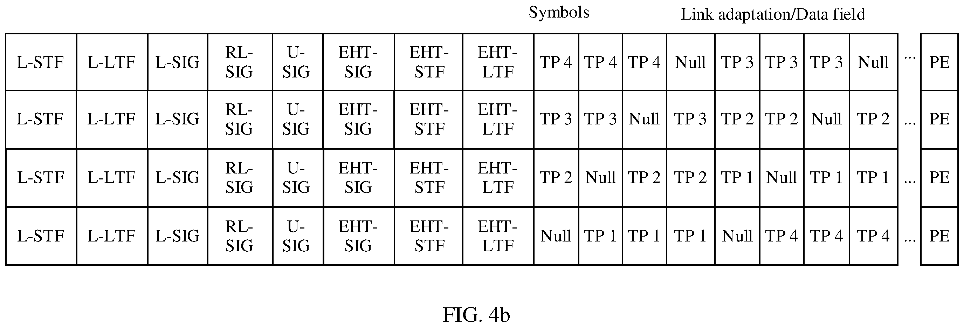

In another implementation, the some of the time-frequency resources include time-frequency resources separately including different symbols and different frequency resource groups. The symbol is the unit of time in the time-frequency resource. As shown in FIG. 4b, it is assumed that the bandwidth occupied by the LA PPDU is 80 MHz. In this case, data subcarriers in the bandwidth occupied by the LA PPDU may be divided into four RUs (an RU 1 to an RU 4 from bottom to top), and one RU is a 242-tone RU, corresponding to 20 MHz. The some of the time-frequency resources may include: time-frequency resources including a first symbol after an EHT-LTF and the RU 1, time-frequency resources including a second symbol after the EHT-LTF and an RU 2, time-frequency resources including a third symbol after the EHT-LTF and an RU 3, and time-frequency resources including a fourth symbol after the EHT-LTF and the RU 4.

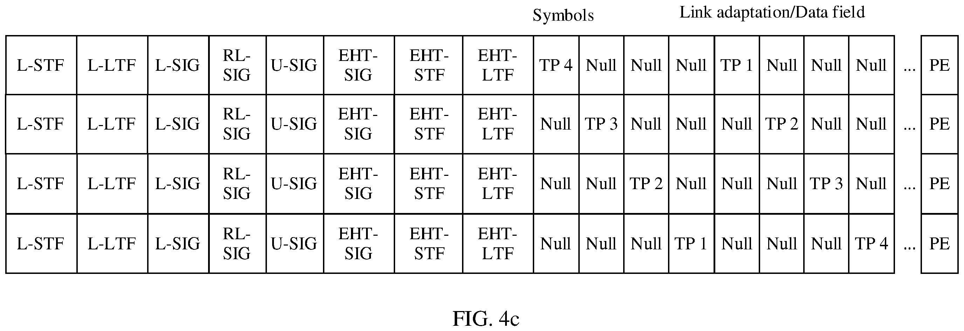

In addition, the LAPPDU may have another format. For example, as shown in FIG. 4c, the some of the time-frequency resources include one symbol and three RUs. In addition, the some of the time-frequency resources may alternatively include one symbol and two RUs. The some of the time-frequency resources alternatively include a first symbol after an EHT-LTF and one RU. The some of the time-frequency resources alternatively include a second symbol after the EHT-LTF and two RUs. The some of the time-frequency resources alternatively include a third symbol after the EHT-LTF and three RUs. The some of the time-frequency resources alternatively include a fourth symbol after the EHT-LTF and one RU. Any LA PDDU format is feasible provided that there is a signal on a time-frequency resource including one symbol and entire bandwidth.

Still refer to FIG. 4b. It is assumed that the bandwidth occupied by the LA PPDU is divided into the RU 1 to the RU 4 in an ascending order of frequencies. The some of the time-frequency resources are the time-frequency resources including the first symbol after the EHT-LTF and the RU 1. The receiver device may estimate, based on a null signal of the LA PPDU on the some of the time-frequency resources, power of noise and power of interference of the some of the time-frequency resources, as a rough interference estimation result.

In addition, a sum of the signal with energy, the noise, and the interference may be further obtained based on a TP 1 on the second symbol, the third symbol, and/or the fourth symbol after the EHT-LTF. Power of the signal with energy can be obtained through comparison.

For obtaining of another link adaptation result, refer to the foregoing descriptions.

In another implementation, the resources are time-space resources. A first time-space resource is a time-space resource including one symbol and all spatial streams. Signals of the LA PPDU on the first time-space resource include a signal with energy and a null signal. The some of the time-space resources in the LAPPDU are time-space resources including one symbol and some of the spatial streams. The some of the spatial streams are some of all the spatial streams. Specifically, in the SU-MIMO system, the some of the spatial streams may be one spatial stream. To be specific, no signal with energy is transmitted on the time-space resource including one symbol and one spatial stream. In the MU-MIMO system, the some of the spatial streams may be one or more spatial streams. To be specific, no signal with energy is transmitted on the time-space resource including one symbol and one or more spatial streams. Power of interference on the some of the time-space resources, for example, power of interference from another time-space resource to the some of the time-space resources, may be estimated through a null signal of the LA PPDU on the some of the time-space resources.

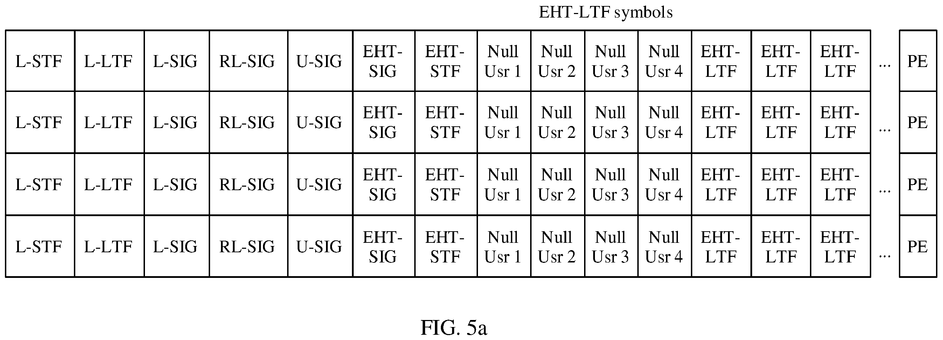

FIG. 5a is a schematic diagram of still another LA PPDU format according to an embodiment of this application. The signal with energy is at least one second sequence. The at least one second sequence is an EHT-LTF. In this example, the LAPPDU format shown in FIG. 3 is still used. To be specific, the format includes the following fields: an L-STF, an L-LTF, an L-SIG, an RL-SIG, a U-SIG, an EHT-SIG, an EHT-STF, an EHT-LTF, and a PE. Optionally, a data field may exist between the EHT-LTF and the PE. A difference is that in this example, LA is implemented through the EHT-LTF field. MU-MIMO is used as an example. The EHT-LTF field exists after the EHT-STF. The EHT-LTF field is divided into a test portion that does not transmit any energy of one or more spatial streams (which may be considered as one spatial stream group), and a test portion (a fifth symbol to an eighth EHT-LTF symbol after the EHT-STF in the figure) that transmits energy of all spatial streams. Specifically, it is assumed that four spatial stream groups are included. A first symbol (Null Usr 1) after the EHT-STF in the figure does not have any energy of a first spatial stream group (the first symbol after the EHT-STF has an EHT-LTF sequence of another spatial stream group), and correspondingly, the fifth symbol after the EHT-STF has EHT-LTF sequences of all the spatial streams. A second symbol (Null Usr 2) after the EHT-STF in the figure does not have any energy of a second spatial stream group (the second symbol after the EHT-STF has an EHT-LTF sequence of another spatial stream group), and correspondingly, a sixth symbol after the EHT-STF has the EHT-LTF sequences of all the spatial streams. A third symbol (Null Usr 3) after the EHT-STF in the figure does not have any energy of a third spatial stream group (the third symbol after the EHT-STF has an EHT-LTF sequence of another spatial stream group), and correspondingly, a seventh symbol after the EHT-STF has the EHT-LTF sequences of all the spatial streams. A fourth symbol after the EHT-STF in the figure does not have any energy of a fourth spatial stream group (the fourth symbol after the EHT-STF has an EHT-LTF sequence of another spatial stream group), and correspondingly, the eighth symbol after the EHT-STF has the EHT-LTF sequences of all the spatial streams.

After performing MIMO channel estimation on EHT-LTFs of the first symbol to the fourth symbol, a receiver device may obtain a sum of power of noise and power of interference for each spatial stream group. After MIMO channel estimation is performed on EHT-LTFs of the fifth symbol to the eighth symbol, a sum of power of the signal with energy, the power of the noise, and the power of the interference for each spatial stream group may be obtained. The power of the signal with energy for each spatial stream group can be obtained through comparison.

Then, the power of the noise may be estimated through two repeated L-LTF portions in the L-LTF field (only power of noise of a non-MIMO channel can be roughly obtained), or the power of the noise may be estimated through two repeated test sequences, or the noise is removed through a smoothing operation of the receiver device.

Therefore, the power of the interference for each spatial stream group may be further obtained based on the obtained power of the signal with energy and power of the noise for each spatial stream group.

Certainly, the MIMO channel estimation may alternatively be performed through only first four symbols (that is, the EHT-LTF field may not include the fifth to the eighth EHT-LTF symbols after the EHT-STF in the figure, where the fifth to the eighth EHT-LTF symbols are the test portion used to transmit the energy of all the spatial streams), and a sum of power of interference and power of noise is roughly obtained as interference, where the interference and the noise are from another spatial stream group to the first spatial stream group. The power of the noise may be estimated through the two repeated L-LTF portions in the L-LTF field, or the noise is removed through the smoothing operation of the receiver device. In this way, the power of the interference is further obtained.

In addition, the LAPPDU includes a subfield of a number of EHT-LTF symbols. The subfield of the number of EHT-LTF symbols indicates a number of symbols corresponding to the at least one second sequence in the LA PPDU. When the LA PPDU is indicated for test of interference between MU-MIMO spatial stream groups, an actual number of EHT-LTF symbols is twice the number of EHT-LTF symbols indicated by the subfield of the number of EHT-LTF symbols (appearing in pairs).

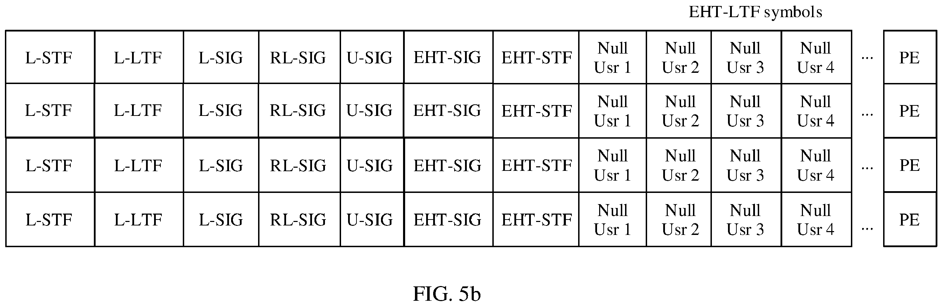

FIG. 5b is a schematic diagram of still another LA PPDU format according to an embodiment of this application. Different from FIG. 5a, in FIG. 5b, MU-MIMO is used as an example. A test portion that does not transmit any energy of one or more spatial streams and a test portion that transmits energy of all spatial streams occupy different frequency portions in entire bandwidth of the LA PPDU. For example, the test portion that does not transmit any energy of one or more spatial streams is located in a first frequency portion, and the test portion that transmits the energy of all the spatial streams is located in a second frequency portion. The first frequency portion may be half of bandwidth occupied by the LA PPDU, and the second frequency portion is the other half of the bandwidth occupied by the LA PPDU. The first frequency portion may be odd-numbered subcarriers of the bandwidth occupied by the LA PPDU, and the second frequency portion is even-numbered subcarriers of the bandwidth occupied by the LA PPDU.

After performing MIMO channel estimation on an EHT-LTF on time-frequency resources that include a first symbol to a fourth symbol and the first frequency portion, the receiver device may obtain a sum of power of noise and power of interference from another spatial stream group for each spatial stream group. After the MIMO channel estimation is performed on an EHT-LTF on time-frequency resources that include the first symbol to the fourth symbol and the second frequency portion, a sum of power of a signal with energy, the power of the noise, and the power of the interference from another spatial stream group for each spatial stream group may be obtained. The power of the signal with energy for each spatial stream group can be obtained through comparison.

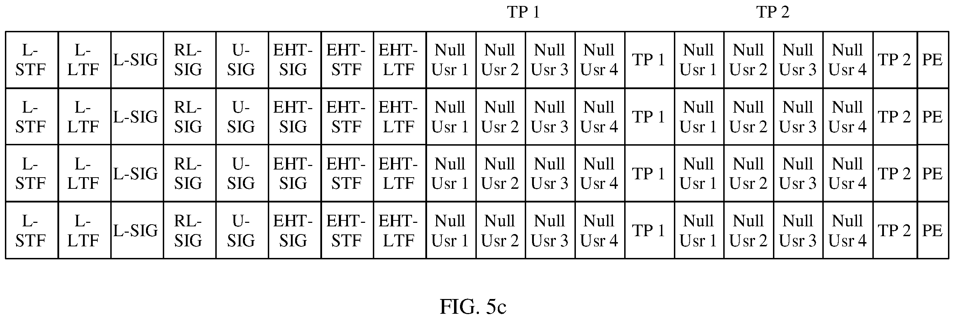

FIG. 5c is a schematic diagram of still another LA PPDU format according to an embodiment of this application. Different from FIG. 5a and FIG. 5b, in FIG. 5c, LA is implemented through an LA/data field. A signal with energy is at least one third sequence. The at least one third sequence is a preset test sequence. As shown in FIG. 5c, MU-MIMO is used as an example. The LA/data field exists after an EHT-LTF. The LA/data field is divided into a test portion that does not transmit any energy of one or more spatial streams (which may be considered as one spatial stream group), and a test portion that transmits energy of all spatial streams. It is assumed that four spatial stream groups are included. A first symbol (Null Usr 1) after the EHT-LTF in the figure does not have any energy of a first spatial stream group (the first symbol after the EHT-LTF has a TP 1 sequence of another spatial stream group). A second symbol (Null Usr 1) after the EHT-LTF does not have any energy of a second spatial stream group (the second symbol after the EHT-LTF has a TP 1 sequence of another spatial stream group). A third symbol (Null Usr 1) after the EHT-LTF does not have any energy of a third spatial stream group (the third symbol after the EHT-LTF has a TP 1 sequence of another spatial stream group). A fourth symbol (Null Usr 1) after the EHT-LTF in the figure does not have any energy of a fourth spatial stream group (the fourth symbol after the EHT-LTF has a TP 1 sequence of another spatial stream group). A fifth symbol after the EHT-LTF has TP 1 sequences of all the spatial streams.

After performing MIMO channel estimation on the TP 1 sequences of the first symbol to the fourth symbol, a receiver device may obtain a sum of power of noise and power of interference from another spatial stream group for each spatial stream group. After the MIMO channel estimation is performed through the TP 1 sequence of the fifth symbol, a sum of power of the signal with energy, the power of the noise, and the power of the interference from the another spatial stream group for each spatial stream group may be obtained. The power of the signal with energy for each spatial stream group can be obtained through comparison.

A test portion modulated by a specific MCS has a pair of symbols of the test portion that transmits the energy of all the spatial streams and the test portion that does not transmit any energy of a specific spatial stream group. In this way, measurement of interference between users in the corresponding MCS can be obtained. In addition, the receiver device may recommend an appropriate MCS in a MIMO scenario through test portions of different MCSs. Therefore, the LA/data field may include test portions corresponding to a plurality of different MCSs. The different MCSs correspond to different TPs.

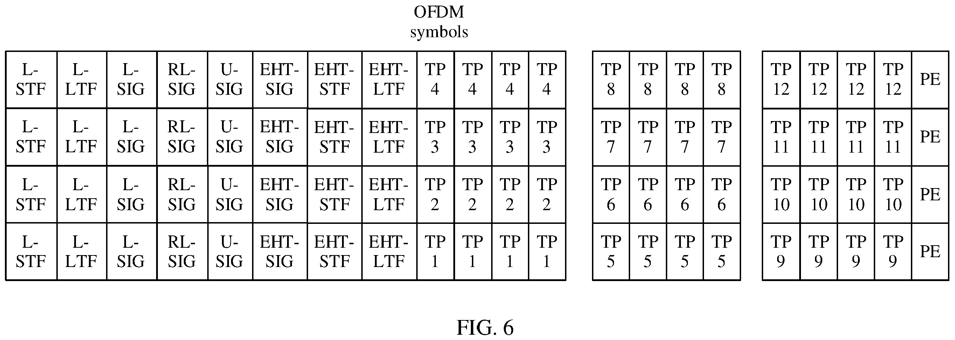

In still another implementation, FIG. 6 is a schematic diagram of an example of still another LA PPDU format according to this application. For this implementation, refer to a midamble structure in 802.11ax. One midamble appears at an interval of M (M is a positive integer) OFDM symbols. During specific implementation, in the LA/data field portion, there are one or more symbols that do not transmit any energy at an interval of M OFDM symbols. As shown in FIG. 6, after an EHT-STF field, there is one symbol that does not transmit any energy at an interval of four OFDM symbols.

A receiving process of a receiver device is similar to that of receiving the midamble, and an existing module and receiving process may be reused as much as possible. This simplifies implementation and reduces costs.

In the foregoing LA PPDU, on the M OFDM symbols, a frequency resource group is used as a unit (the LA PPDU is divided into four frequency resource groups). One TP (any one of a TP 1 to a TP 4) is set on one symbol and one frequency resource group. The receiver device measures interference once at an interval of M symbols. To be specific, the interference may be obtained through measurement through a symbol that does not transmit energy and a signal on the M symbols.

Data may also be transmitted on the M OFDM symbols.

In addition, a symbol that does not transmit any energy may also be periodically set. Still refer to FIG. 6. M symbols with energy and one symbol that does not transmit any energy are periodically distributed. The receiver device may obtain a change condition of the interference by periodically measuring the symbol that does not transmit energy and the signal on the M symbols.

Optionally, there is only one symbol that does not transmit any energy at an interval of M symbols. In this case, a length of the symbol is less than or equal to 16 microseconds, that is, a length of a short inter-frame space in a standard. This can prevent a third-party device from preempting an air interface resource.

In another embodiment, the LAPPDU may further include indication information. The indication information indicates that the PPDU is used for link adaptation detection, that is, the PPDU is the LA PPDU.

This embodiment may be implemented separately from the foregoing embodiments, or may be implemented in combination with the foregoing embodiments.

In an implementation, the indication information may be located in a disregard or validate field of a U-SIG and/or an EHT-SIG. For example, the indication information is located in any one of bits B20 to B24 (disregard) of a first symbol in the U-SIG field, a bit B25 (validate), a bit B2 (validate) and a bit B8 (validate) of a second symbol in the U-SIG field, or bits B13 to B16 (disregard) in the EHT-SIG field. Validate (validate) and disregard (disregard) are two different reserved bits. There are two types of reserved/unused bits (reserved bits) in a signal field of a physical layer preamble in 802. 1 1be or reserved/unused states (entry) of a specific (sub) field: validate and disregard. If a device that implements a basic feature of an EHT finds that a validate bit in one PPDU is not set to a default (default) value specified in the standard or values of some subfields are set to a validate state, the device needs to wait until the PPDU ends (defer for the duration of the PPDU), transfers related information in a version independent field to a medium access control (medium access control, MAC) layer, to ensure coexistence, and stops receiving the PPDU. For a disregard bit or a subfield that is set to a disregard state, if an EHT device does not find the foregoing condition (the validate bit is not set to the default (default) value specified in the standard or the values of some subfields are set to the validate state), the EHT device ignores the disregard bit or ignores a specific subfield that is set to the disregard state, and continues to read another field.

In another implementation, the indication information is located in a customized PPDU format and compressed mode field in the U-SIG field. A format of the U-SIG field is shown in the following Table 3.

**Table 3**

| U-SIG field | | Description | | | | |
|---|---|---|---|---|---|---|
| Uplink/Downlink | EHT PPDU type and compressed mode | EHT PPDU type | Whether an EHT-SIG exists? | Whether a resource unit allocation indication subfield exists? | Number of user fields or transmitters in a PPDU | Annotation |
| 0 (downlink) | 0 | EHT MU | Yes | Yes | ≥1 | Downlink orthogonal frequency division multiple access, including non-MU-MIMO and MU-MIMO |
| | 1 | EHT MU | Yes | No | 1 for an SU, and 0 for an NDP | Single user or null data packet (not sent to an AP, and usually indicating downlink) |
| | 2 | EHT MU | Yes | No | >1 | Non-OFDMA transmission |
| | 3 | EHT MU | Yes | Yes | 0 or≥1 | LA PPDU (the EHT MU based) |
| 1 (uplink) | 0 | EHT TB (trigger based) | No | - | ≥1 | UL OFDMA (including non-MU-MIMO and MU-MIMO) |
| | 1 | EHT MU | Yes | No | 1 for an SU, and 0 for an NDP | SU or NDP (sent to an AP, that is, uplink) |
| | 2 | EHT TB | No | - | - | LA PPDU (EHT TB based) |
| | 3 | EHT MU | Yes | Yes | 0 or≥1 | LA PPDU (EHT MU based) |

For example, when the U-SIG indicates downlink transmission, and a value of the EHT PPDU type and compressed mode is "3 ", the PPDU is the LA PPDU. For another example, when the U-SIG indicates uplink transmission, and a value of the EHT PPDU type and compressed mode is "2" or "3", the PPDU is the LA PPDU.

In an implementation, a transmitter device may send the LA PPDU to a receiver device when receiving a trigger frame (trigger frame, TF) sent by the receiver device.

The trigger frame is used to schedule/indicate the receiver device to send the LAPPDU to the transmitter device.

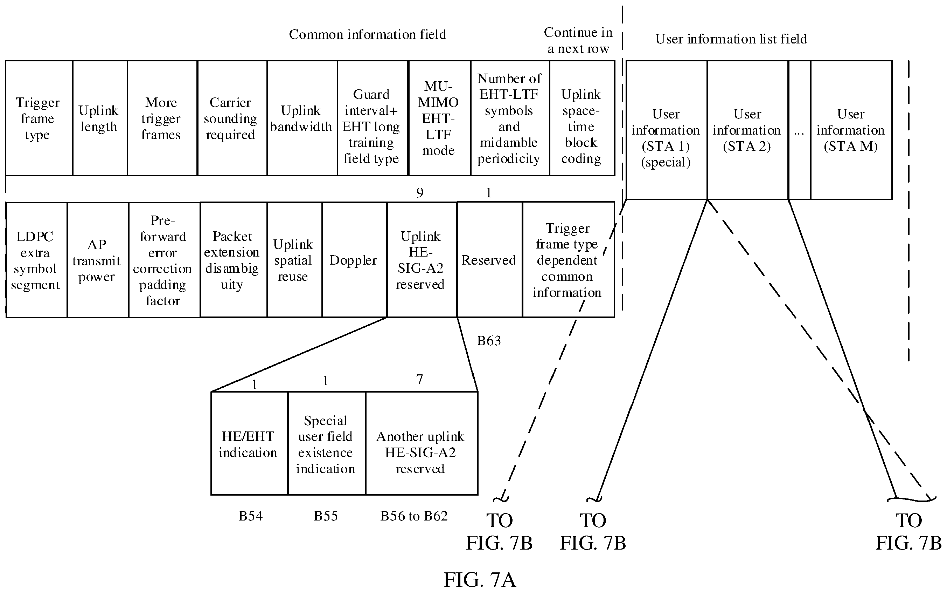

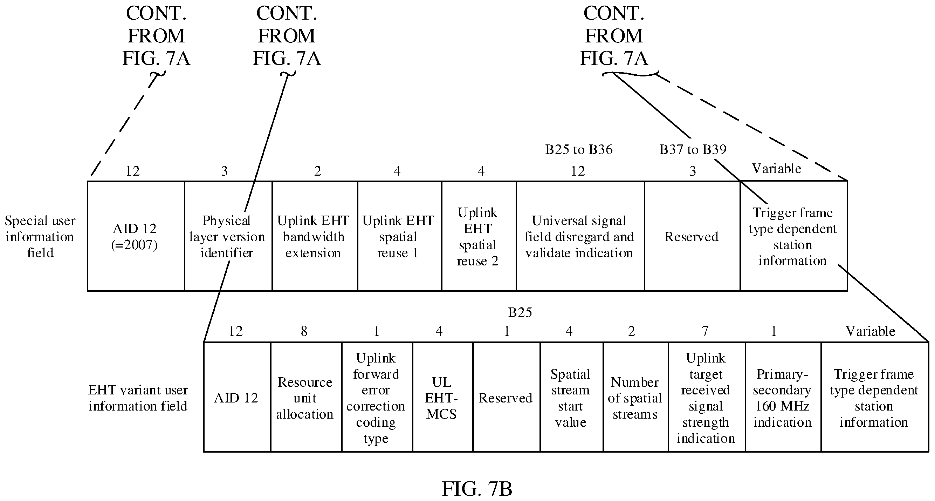

A format of the trigger frame is shown in FIG. 7A and FIG. 7B. The trigger frame includes a common information field and a user information list field. The common information field includes the following fields: a trigger type (trigger type) field, an uplink length (uplink length) field, a more trigger frames (more TFs) field, a carrier sounding required (carrier sounding required) field, an uplink bandwidth (uplink bandwidth) field (this field is included in a high throughput (high throughput, HE) standard), a guard interval (guard interval, GI)+EHT long training field type (EHT-LTF type) field, an MU-MIMO EHT-LTF mode (mode) field, a number of EHT-LTF symbols and midamble periodicity (number of EHT-LTF symbols and midamble periodicity) field, an uplink space-time block coding (UL STBC) field, an LDPC extra symbol segment (LDPC extra symbol segment) field, an AP transmit power (AP Tx power) field, a pre-forward error correction padding factor (pre-FEC padding factor) field, a packet extension disambiguity (PE disambiguity) field, an uplink spatial reuse (UL spatial reuse) field, a Doppler (Doppler) field, an uplink HE-SIG-A2 reserved (UL HE-SIG-A2 reserved) field, a reserved bit (a B63^{th} bit) field, and a trigger type dependent common information (trigger dependent common info) field.

The uplink HE-SIG-A2 reserved field may further include the following fields: an HE/EHT indication (a B54^{th} bit) field, a special user field existence indication (a B55^{th} bit) field, and another uplink HE-SIG-A2 reserved (a B56^{th} bit to a B62^{th} bit) field.

The user information list field includes the following fields: a field of user information of a station 1, a field of user information of a station 2, ..., and a field of user information of a station M.

The field of user information of a station 1 is a special field, and may further include the following fields: an association identifier (AID 12=2007) field, a physical layer version identifier (PHY version ID) field, an uplink EHT bandwidth extension (UL EHT BW extension) field, an uplink EHT spatial reuse (UL EHT spatial reuse) field 1, an uplink EHT spatial reuse field 2, a universal signal field disregard and validate indication (U-SIG disregard and validate) field, a reserved bit (a B37^{th} to a B39^{th} bits) field, and a trigger type dependent station information (dependent user info) field (a bit of the field is variable).

The field of user information of a station 2 is also referred to as an EHT variant user information field, and may include the following fields: an association identifier (AID 12) field, a resource unit allocation (RU allocation) field, an uplink forward error correction coding type (UL FEC coding type) field, an uplink extremely high throughput modulation and coding scheme (UL EHT-MCS) field, a reserved bit (a B251^{th} bit) field, a spatial stream start value field, a number of spatial streams field, an uplink target received signal strength indication (UL target RSSI) field, a primary-secondary 160 MHz indication (PS 160) field, and a trigger type dependent station information field.

In this embodiment, some or all of the reserved bits in the trigger frame shown in FIG. 7A and FIG. 7B may indicate that a to-be-scheduled PPDU is an LAPPDU, for example, a B56 to a B62 and a B63 in the common information field, a B25 to a B36 and a B37 to a B39 in the special user information field, and a B25 in the EHT variant user information field.

In addition, some or all of the foregoing fields may further indicate a specific resource on which a signal is a null signal in the LAPPDU.

An EHT-MCS 14 of the UL EHT-MCS in the EHT variant user information field may also indicate a specific resource on which a signal is a null signal in the LAPPDU.

The foregoing describes the solutions provided in embodiments of this application. It may be understood that, to implement the foregoing functions, the receiver device or the transmitter device includes a corresponding hardware structure and/or software module for performing each function. A person skilled in the art should be easily aware that, a unit and an algorithm step in each example described with reference to embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described function for each particular application, but it should not be considered that the implementation goes beyond the scope of this application.

In embodiments of this application, functional module division of the receiver device and the transmitter device may be performed based on the foregoing method example. For example, each functional module may be obtained through division corresponding to each function, or two or more functions may be integrated in one processing module. The functional module may be implemented in a form of hardware, or may be implemented in a form of a software functional module. It should be noted that, in embodiments of this application, module division is an example, and is only a logical function division. During actual implementation, there may be another division manner. The following uses division of each functional module based on a corresponding function as an example for description.

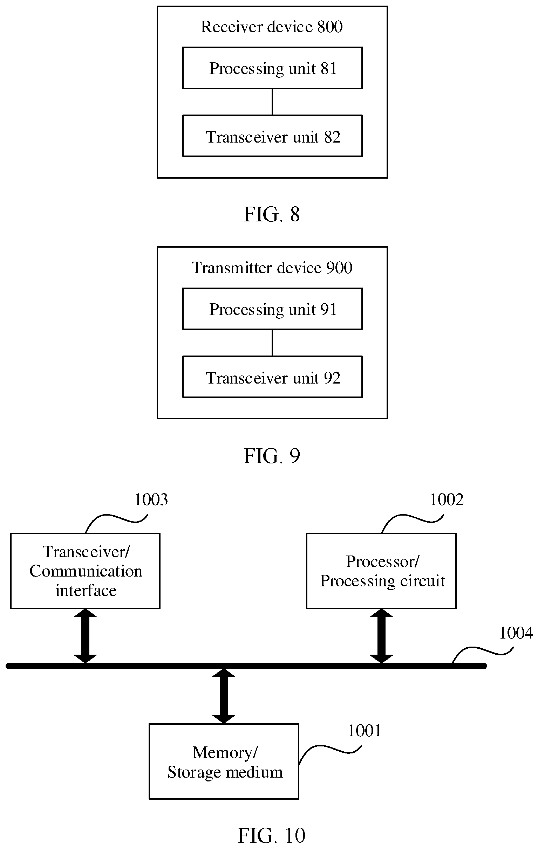

FIG. 8 is a schematic diagram of a possible structure of a receiver device. The receiver device 800 includes a processing unit 81 and a transceiver unit 82. The processing unit 81 is configured to perform step S203 in the foregoing embodiment. The transceiver unit 82 is configured to perform a receiving operation in step S202 in the foregoing embodiment, and may be further configured to perform a sending operation in step S204 in the foregoing embodiment.

FIG. 9 is a schematic diagram of a possible structure of a transmitter device. The transmitter device 900 includes a processing unit 91 and a transceiver unit 92. The processing unit 91 is configured to perform step S201 in the foregoing embodiment. The transceiver unit 92 is configured to perform a sending operation in step S202 in the foregoing embodiment, and may be further configured to perform a receiving operation in step S204 in the foregoing embodiment.

All related content of each step in the foregoing method embodiment may be cited in a function description of a corresponding functional module. Details are not described herein again.

FIG. 10 is a schematic diagram of a structure of a possible product form of a receiver device according to an embodiment of this application.

In a possible product form, the receiver device includes a processor 1002 and a transceiver 1003. The processor 1002 is configured to perform step S203 in the foregoing embodiment. The transceiver 1003 is configured to perform a receiving operation in step S202 in the foregoing embodiment, and may be further configured to perform a sending operation in step S204 in the foregoing embodiment.

Optionally, the receiver device may further include a memory 1001.

In another possible product form, the receiver device is implemented by a general-purpose processor, namely, a chip. The general-purpose processor includes a processing circuit 1002 and a communication interface 1003. Optionally, the general-purpose processor may further include a storage medium 1001.

The processing circuit 1002 is configured to perform step S203 in the foregoing embodiment. The communication interface 1003 is configured to perform the receiving operation in step S202 in the foregoing embodiment, and may be further configured to perform the sending operation in step S204 in the foregoing embodiment.

In another possible product form, the receiver device may alternatively be implemented by using the following: one or more field programmable gate arrays (field programmable gate arrays, FPGA), a programmable logic device (programmable logic device, PLD), a controller, a state machine, a logic gate, a discrete hardware component, any other appropriate circuit, or any combination of circuits that can perform various functions described throughout this application.

The processor 1002 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor may alternatively be a combination of processors implementing a computing function, for example, a combination of one or more microprocessors, or a combination of the digital signal processor and a microprocessor. A bus 1004 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 10, but this does not mean that there is only one bus or only one type of bus.

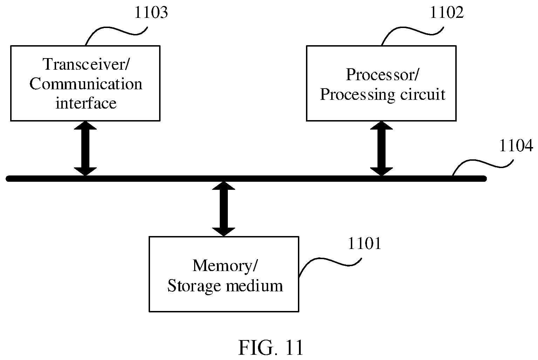

FIG. 11 is a schematic diagram of a structure of a possible product form of a transmitter device according to an embodiment of this application.

In a possible product form, the transmitter device includes a processor 1102 and a transceiver 1103.

The processor 1102 is configured to perform step S201 in the foregoing embodiment. The transceiver 1103 is configured to perform a sending operation in step S202 in the foregoing embodiment, and may be further configured to perform a receiving operation in step S204 in the foregoing embodiment.

Optionally, the transmitter device may further include a memory 1101.

In another possible product form, the transmitter device is implemented by a general-purpose processor, namely, a chip. The general-purpose processor includes a processing circuit 1102 and a communication interface 1103. Optionally, the general-purpose processor may further include a storage medium 1101.

The processing circuit 1102 is configured to perform step S201 in the foregoing embodiment.

The communication interface 1003 is configured to perform the sending operation in step S202 in the foregoing embodiment, and may be further configured to perform the receiving operation in step S204 in the foregoing embodiment.

In another possible product form, the transmitter device may alternatively be implemented by using the following: one or more FPGAs, a PLD, a controller, a state machine, a logic gate, a discrete hardware component, any other appropriate circuit, or any combination of circuits that can perform various functions described throughout this application.

The processor 1102 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor may alternatively be a combination of processors implementing a computing function, for example, a combination of one or more microprocessors, or a combination of the digital signal processor and a microprocessor. A bus 1104 may be a PCI bus, an EISA bus, or the like. The bus may be classified into an address bus, a data bus, a control bus, and the like. For ease of representation, only one bold line is used to represent the bus in FIG. 11, but this does not mean that there is only one bus or only one type of bus.

A person of ordinary skill in the art may understand that all or some of the steps of the method embodiment may be implemented by hardware related to program instructions. The program instructions may be stored in a computer-readable storage medium. When the program instructions are run, the steps of the method embodiment are performed. The foregoing storage medium includes any medium that can store program code, for example, a USB flash drive, a removable hard disk, a ROM, a RAM, a magnetic disk, or an optical disc.

According to an aspect, an embodiment of this application further provides a readable storage medium. The readable storage medium stores computer-executable instructions. When the computer-executable instructions are run, a device (which may be a single-chip microcomputer, a chip, a controller, or the like) or a processor is enabled to perform the steps in the link adaptation method provided in this application.

According to an aspect, an embodiment of this application further provides a computer program product. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, so that the device performs the steps in the link adaptation method provided in this application.

A person skilled in the art may clearly understand that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in another manner. For example, unit division is only logical function division. During actual implementation, there may be another division manner. For example, a plurality of units or components may be combined or integrated into another system, or some features may be ignored or not performed. A displayed or discussed mutual coupling or direct coupling or communication connection may be an indirect coupling or a communication connection implemented through some interfaces, apparatuses, or units, and may be in electrical, mechanical, or other forms.

Units described as separate parts may or may not be physically separate, and parts displayed as units may or may not be physical units, that is, may be located in one place, or may be distributed on a plurality of network units. Some or all of the units may be selected based on an actual requirement to achieve objectives of the solutions of embodiments.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the processes or functions based on embodiments of this application are generated. The computer may be a general-purpose computer, a dedicated computer, a computer network, or another programmable apparatus. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center that integrates one or more usable media. The usable medium may be a read-only memory (read-only memory, ROM), a random access memory (random access memory, RAM), a magnetic medium like a floppy disk, a hard disk, a magnetic tape, and a magnetic disk, an optical medium like a digital versatile disc (digital versatile disc, DVD), or a semiconductor medium like a solid-state drive (solid-state drive, SSD).

## Claims

1. A link adaptation method, wherein the method comprises:
receiving a link adaptation physical layer protocol data unit LA PPDU, wherein a signal of the LA PPDU on some of resources is a null signal, and the resources comprise any one or more of the following: a time resource, a frequency resource, a space resource, a time-frequency resource, a time-space resource, a frequency-space resource, or a time-space-frequency resource; and
determining a link adaptation result based on the null signal of the LAPPDU on the some of the resources.

2. The method according to claim 1, wherein the method further comprises:
sending a trigger frame, wherein the trigger frame indicates to send the LA PPDU.

3. The method according to claim 1 or 2, wherein the determining a link adaptation result based on the null signal of the LAPPDU on the some of the resources comprises:
estimating, based on the null signal of the LA PPDU on the some of the resources, power of interference on the some of the resources; and
obtaining the link adaptation result based on the power of the interference on the some of the resources.

4. A link adaptation method, wherein the method comprises:
generating a link adaptation physical layer protocol data unit LA PPDU, wherein a signal of the LA PPDU on some of resources is a null signal, and the resources comprise any one or more of the following: a time resource, a frequency resource, a space resource, a time-frequency resource, a time-space resource, a frequency-space resource, or a time-space-frequency resource; and
sending the LA PPDU.

5. The method according to claim 4, wherein the method further comprises:
receiving a trigger frame, wherein the trigger frame indicates to send the LA PPDU.

6. The method according to any one of claims 1 to 5, wherein the resources are time-frequency resources, signals of the LA PPDU on a first time-frequency resource comprise a signal with energy and a null signal, and the first time-frequency resource is a time-frequency resource comprising one symbol and bandwidth occupied by the LA PPDU.

7. The method according to claim 6, wherein the bandwidth occupied by the LA PPDU comprises a plurality of frequency resource groups, and the some of the time-frequency resources are time-frequency resources comprising one symbol and some of the frequency resource groups.

8. The method according to any one of claims 1 to 7, wherein the resources are the time-frequency resources, and the some of the time-frequency resources comprise time-frequency resources separately comprising different symbols and different frequency resource groups.

9. The method according to claim 7 or 8, wherein the some of the time-frequency resources are periodic.

10. The method according to claim 6 or 7, wherein the signal with energy is at least one first sequence, the at least one first sequence is a preset test sequence, and different first sequences correspond to different modulation and coding schemes MCSs; or
the signal with energy is a data bit, and the data bit carries a media access control protocol data unit MPDU.

11. The method according to any one of claims 1 to 5, wherein the resources are time-space resources, signals of the LA PPDU on a first time-space resource comprise a signal with energy and a null signal, and the first time-space resource is a time-space resource comprising one symbol and all spatial streams.

12. The method according to any one of claims 1 to 5, wherein the resources are time-space resources, and the some of the time-space resources are time-space resources comprising one symbol and some of the spatial streams.

13. The method according to claim 11, wherein the signal with energy is at least one second sequence, and the at least one second sequence is an extremely high throughput long training field EHT-LTF.

14. The method according to claim 13, wherein the LA PPDU comprises a subfield of a number of EHT-LTF symbols, and the subfield of the number of EHT-LTF symbols indicates a number of symbols corresponding to the at least one second sequence in the LA PPDU.

15. The method according to claim 13, wherein the signal with energy is at least one third sequence, the at least one third sequence is a preset test sequence, and different third sequences correspond to different MCSs; or the signal with energy is a data bit that carries a media access control protocol data unit MPDU.

16. The method according to any one of claims 1 to 15, wherein the link adaptation result comprises at least one of the following:
power of interference;
power of noise;
power of the signal with energy;
a signal-to-noise ratio;
a signal to interference plus noise ratio;
a recommended modulation and coding scheme MCS based on the signal-to-noise ratio;
a recommended MCS based on the signal to interference plus noise ratio;
a recommended number of spatial streams based on the signal-to-noise ratio; or
a recommended number of spatial streams based on the signal to interference plus noise ratio.

17. The method according to any one of claims 1 to 16, wherein the LA PPDU further comprises indication information, and the indication information indicates that the LA PPDU is used for link adaptation detection.

18. The method according to claim 17, wherein the indication information is located in any one of the following:
any one of B20 to B24 of a first symbol of a universal signal U-SIG field;
B25 of the first symbol of the U-SIG field;
B2 or B8 of a second symbol of the U-SIG field;
any one of B13 to B16 of an extremely high throughput signal field EHT-SIG; or
a customized PPDU format and compressed mode field in the U-SIG field.

19. A receiver device, comprising a unit configured to perform the method according to any one of claims 1 to 3 and 6 to 18.

20. A transmitter device, comprising a unit configured to perform the method according to any one of claims 4 to 18.

21. A computer-readable storage medium, wherein the storage medium stores a computer program or instructions, and when the computer program or the instructions are executed, the method according to any one of claims 1 to 18 is implemented.

22. A computer program, wherein the computer program comprises instructions for implementing the method according to any one of claims 1 to 18.
